Europäisches Patentamt

(19) European Patent Office (11) Publication number: **0 007 912**
Office européen des brevets **B1**

(12) **EUROPEAN PATENT SPECIFICATION**

(45) Date of publication of patent specification: **21.09.83**  (51) Int. Cl.³: **G 06 F 3/153, H 04 N 3/00**

(21) Application number: **79900092.2**

(22) Date of filing: **28.12.78**

(86) International application number:
**PCT/US78/00258**

(87) International publication number:
**WO 79/00484 26.07.79 Gazette 79/15**

(54) **LIGHT PEN DETECTION SYSTEM HAVING CONTRAST REVERSAL INDICATION.**

| | |
|---|---|
| (30) Priority: **09.01.78 US 868109** | (73) Proprietor: **NCR Corporation**<br>**World Headquarters**<br>**Dayton Ohio 45479 (US)** |
| (43) Date of publication of application:<br>**06.02.80 Bulletin 80/3** | (72) Inventor: **DevCHOUDHURY, Rathindra, Nath**<br>**52 Highgate Circle**<br>**Ithaca, NY 14850 (US)** |
| (45) Publication of the grant of the patent:<br>**21.09.83 Bulletin 83/38** | |
| (84) Designated Contracting States:<br>**DE FR GB** | (74) Representative: **Robinson, Robert George**<br>**International Patent Department NCR Limited 206**<br>**Marylebone Road**<br>**London NW1 6LY (GB)** |
| (56) References cited:<br>**US - A - 3 509 350**<br>**US - A - 3 651 508**<br>**US - A - 3 768 073**<br>**US - A - 3 868 673**<br>**US - A - 3 895 374**<br>**US - A - 3 911 419**<br>**US - A - 3 997 891**<br>**US - A - 4 022 969**<br>**US - H - 915 013** | |

Courier Press, Leamington Spa, England

# Light pen detection system having contrast reversal indication

## Technical Field

This invention relates to light pen detection systems of the kind including a cathode ray tube having a display screen, video drive means adapted to form indicia images on and contrasting visually with the background of said display screen, a light pen provided with transducing means adapted to provide a detection signal in response to detecting one of said indicia images, and verifying means coupled to said video drive means and adapted to cause said video drive means to provide a visual indication on said display screen of the one of said indicia images detected by said transducing means, said verifying means including storage means arranged to store location data representing the location of the detected indicia image.

The invention also relates to a method of detecting images on a television screen.

## Background Art

A light pen detection system of the kind specified is known from U.S. Patent Specification No. 3,997,891.

In operation of this known system, prior to the detection operation, a switch associated with the light pen is turned on. The light pen is then positioned at the character position desired to be detected, the verifying means being effective cause the entire character display position to be illuminated thereby indicating the location of the detected character. The verifying means includes a latch register which holds the address of the character display position detected in the last detecting operation of the light pen before the light pen switch is turned off.

The known system has the disadvantage that a problem may arise during the light pen detection operation if the light pen is inadvertently moved so as to receive light from an adjacent indicia image as well as from the originally detected image, such reception of light from an adjacent indicia image possibly resulting in the indication of an undesired character location.

## Disclosure of the Invention

It is an object of the present invention to provide a light pen detection system of the kind specified wherein the aforementioned disadvantage is alleviated.

Therefore, according to the present invention, there is provided a light pen detection system of the kind specified, characterized in that said verifying means is adapted to reverse the visual contrast of the detected indicia image and an adjacent background region of said display screen in dependence on the stored location data, and in that said verifying means includes automatically locking means responsive to the provision of said detection signal and adapted to provide a locking control signal effective to disable said storage means from storing the address of a further indicia image as long as said transducing means continues to provide said detection signal.

It will be appreciated that in a light pen detection system according to the invention the provision of the automatically locking means is effective to prevent a further indicia image from being detected as long as the light pen is continuing to detect any light from the originally detected indicia image.

A further advantage of the invention is that since the detected character and its background are reversed in contrast, a clearer indication of the detected character is obtained than with said known system, wherein the entire detected character position is illuminated.

It is to be noted that U.S. Patent Specification No. 3,895,374 discloses a display apparatus for displaying data characters on a CRT screen wherein character data is accompanied by attribute data which determines the manner in which one or more succeeding coded data characters are to be displayed on the CRT screen. Such attributes may specify "strike out", "light pen detect", "invert", "underline", "intensify" or "double width" attributes for the characters to be displayed in inverted form, such inverted display is caused by virtue of an appropriate "invert" attribute character and not as a result of light pen detection as in the present invention. Furthermore, although U.S. Patent Specification No. 3,895,374 discloses a light pen, the displayed characters are not normally detectable by the light pen, but only characters having seven successive dots in the fifth master scan line are amenable to light pen detection.

According to another aspect of the present invention, there is provided a method of detecting images on a television screen adapted to have a plurality of indicia images displayed thereon, including the steps of moving a light pen including transducing means adjacent to a selected one of said images, generating a detection signal in response to the detection of said selected indicia image by said transducing means, providing a visual indication on said television screen of the selected image, and storing in data storage means data representing the location on the screen of the detected indicia image, characterized by the steps of reversing the visual contrast of the detected indicia image and an adjacent background region of said television screen, in response to the stored location data, and automatically providing a locking control signal effective to disable said data storage means from storing fresh data, as long as said detection signal continues to be produced.

Brief Description of Drawings

One embodiment of the invention will now be described by way of example with reference to the accompanying drawings, in which:—

Fig. 1 is a simplified block diagram of a data processing system including a light pen detection system in accordance with the invention;

Fig. 2 is a block diagram of a control circuit employed in the system shown in Fig. 1;

Fig. 3 is a circuit diagram of a locking circuit arrangement employed in the system shown in Fig. 1; and

Fig. 4 is a timing diagram useful in explaining the operation of the system shown in Fig. 1.

Best Mode for Carrying out the Invention

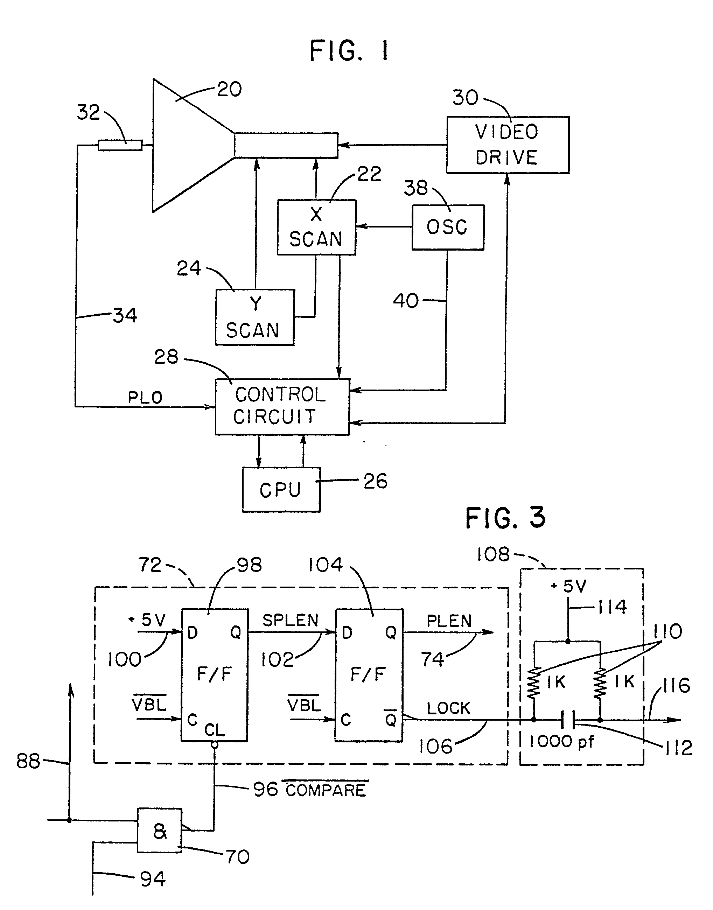

Referring now to Fig. 1, the light pen detection system shown therein includes a cathode ray tube (CRT) 20 on which is projected data in the form of alphanumeric characters under the control of X and Y scan circuits 22 and 24, respectively, each of which contains the deflection signals in an alog form in accordance with digital information stored in a central processing unit (CPU) 26. The digital information stored in the CPU 26 is transmitted through a control circuit 28 which converts the digital information into the appropriate analog signals for outputting to the X and Y scan circuits 22, 24 for displaying the data on the CRT in a manner that is well known in the art. The control circuit 28 will also generate a control signal for controlling the video drive circuit 30 of the CRT 20 in illuminating the displayed characters and to provide a character identification signal.

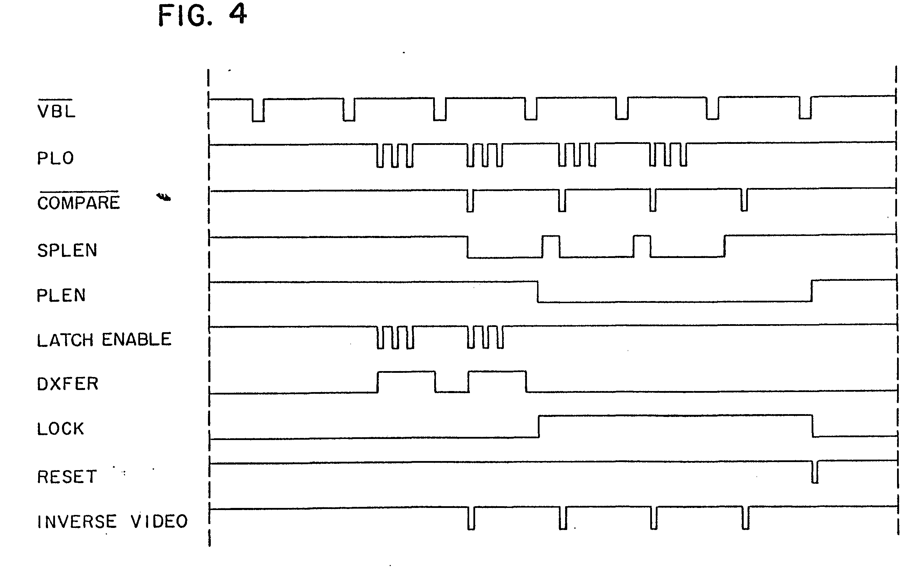

Associated with the CRT 20 is a light pen 32 of well known construction which includes a light sensing transducer (not shown) actuated by the generation of a source of light on the screen of the CRT 20 sensed by the transducer, the transducer outputting a signal PLO (Fig. 4) indicating the detection of the light source. This output signal PLO is transmitted over a line 34 to the control circuit 28 for controlling the video drive 30 to provide an indication to the operator of the source of light sensed by the light pen 32 and for use in identifying the location of the source of light on the screen of the CRT, from which the CPU 26 will execute a program in accordance with the location of that particular source of light sensed by the light pen. In the present embodiment, the light pen system is incorporated in a data terminal device in which data in the form of alphanumeric characters is displayed on the screen of the CRT in response to the sensing of previously displayed alphanumeric characters on the CRT 20.

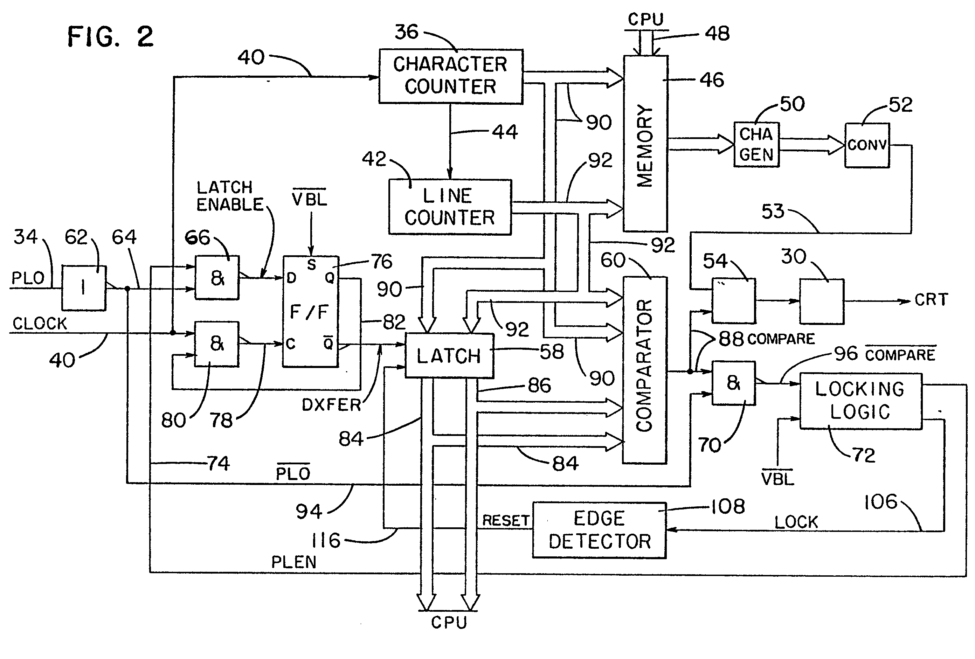

Referring now to Fig. 2, there is shown a block diagram of the control circuit 28 (Fig. 1) used in the present embodiment. Included in the control circuit 28 is a character counter 36 clocked by a system clock transmitted from an oscillator 38 (Fig. 1) over line 40 to the character counter 36. The character counter 36 outputs a count for each character position on each horizontal scan line of the CRT screen in a manner that is well known in the art. A line counter 42 is also included, which is clocked by the system clock transmitted over line 44 from the character counter 36, the count output of the line counter 42 being equal to each line position on the CRT screen. In conventional CRT scanning operations the number of characters and lines displayed may vary. Normally, there are 24 or 25 lines of characters capable of being displayed on the CRT screen with 80 character positions on each line. The system clock is selected to correspond to one character time on each horizontal scan line which in the present embodiment is 619 nanoseconds.

The output counts of the counters 36 and 42 are used as addresses to address a CRT buffer memory unit 46 over buses 90 and 92, which memory 46 has stored at each character position the character data to be displayed, and which data has been loaded into the memory unit 46 over a bus 48 from the CPU 26 (Fig. 1). The output of the memory unit 46, in the form of binary data, is transmitted to a character generator 50 which converts the binary data representing the character to be displayed into the appropriate dot pattern which is to form the displayed character. The characters may be displayed using the well known five by seven dot matrix configuration, although any other dot matrix configuration may be used. The output of the character generator 50 is then transmitted through a parallel to serial converter 52, a logical exclusive OR circuit 54, and the video drive circuit 30 (see also Fig. 1) for displaying on the CRT 20 screen the dot pattern representing the character programmed to be displayed at the character position identified by the output of the counters 36 and 42.

The outputs of the counters 36 and 42 are also transmitted over the buses 90 and 92 to a latch 58 and a comparator 60 to provide a character identification condition and a locking condition for the operation of the light pen 32 (Fig. 1) in a manner which will now be described. As previously disclosed, the output signal PLO (Fig. 4) of the light pen 32 is generated upon the positioning of the light pen adjacent a character displayed on the screen. The light pen 32 outputs a signal of +5 volts when it does not see a light source and a 0 volts signal when it does see a light source. The output signal PLO is transmitted over the line 34 (see also Fig. 1) to an inverter circuit 62 whose output signal $\overline{PLO}$ is transmitted over a line 64 to one input of a logical NAND circuit 66 over a line 94 to an input of a second logical NAND circuit 70 conditioning the latter circuit to output a signal $\overline{COMPARE}$ (Fig. 4) over a line 96 to a locking circuit 72 upon receiving a control signal from the comparator 60 in a manner that will be described hereinafter.

Upon sensing each dot in a displayed character positioned adjacent the tip of the light pen 32, the output signal PLO generated by the transducer in the light pen 32 will go low (Fig. 4) resulting in the output signal $\overline{PLO}$ going high. This latter signal is gated by the NAND circuit 66 which has been enabled by a signal PLEN (Fig. 4) being inputted to the other input of the NAND circuit 66 over a line 74 from the locking circuit 72 (Fig. 2). The signal PLEN is high at this time. The output of the NAND circuit 66 is connected to the D input (Fig. 2) of a D-type flip-flop 76 whose preset input is connected to the CRT video drive circuit 30 (Fig. 1) to receive a vertical blanking signal $\overline{VBL}$ which, as shown in Fig. 4, goes low at the end of each scan operation of the CRT. The flip-flop 76 receives the character clock over a line 78 from a logical NAND circuit 80 whose inputs are connected to the oscillator 38 (Fig. 1) and the Q output line 82 of the flip-flop 76. The gating of the input signal $\overline{PLO}$ by the NAND circuit 66 will output a low signal LATCH ENABLE (Fig. 4) to the D input of the flip-flop 76 (Fig. 2) resetting the flip-flop thereby outputting a high signal DXFER for one scan period (Fig. 4) to the latch 58 setting the latch. The resetting of the flip-flop 76 by the LATCH ENABLE signal will also result in the output of a low signal over the line 82 to the logical NAND circuit 80 thereby disabling the clocking of the flip-flop 76 by the character clock over the line 78. The setting of the latch 58 at this time will output over buses 84, 86 the counts received from the character counter 36 and the line counter 42 respectively, representing the position of the character sensed by the light pen 32. The latched output of the counts of the counters 36 and 42 are transmitted to the CPU 26 over the buses 84, 86 which will, in the present application, generate a new display of characters in accordance with the character sensed by the light pen. The latched output of the latch 58 is also transmitted to the comparator 60 which will output a signal COMPARE over a line 88 upon finding a coincidence between the latched output transmitted from the latch 58 over the buses 84 and 86 and the counter 36 and 42 outputs transmitted over buses 90 and 92.

The output signal COMPARE of the comparator 60 is transmitted over the line 88 to one input of the exclusive OR circuit 54 which inverts the signal from the converter 52 transmitted to the other input of the circuit over line 53, to provide an INVERSE VIDEO signal (Fig. 4). The output signal COMPARE is high whenever the scanning electron beam of the CRT passes over the position of the latched character. When this occurs, the video drive 30 (Fig. 1) will effect a contrast reversal or inversion of the display of the latched character, that is, the latched character will be displayed as white on a black background where characters are normally displayed black over white, and black on white for those situations where the characters are normally displayed white over black.

The signal COMPARE is outputted from the comparator 60 as long as the light pen 32 picks up any light from the latched character. If the pen is removed from the latched character, the outputs of the latch 58 will go high (0 bits) which do not match the output of the counters 36, 42, thereby keeping the output of the comparator 60 low. The effect of inverting the display field by the video drive 30 upon sensing a character position produces a reversal in contrast of the character which is being sensed by the light pen 32, allowing the operator to observe the location of the sensed character and to take any steps necessary to ensure that the desired character is being sensed by the light pen 32. It will be appreciated that manual movement of the light pen into and out of the detected character position will cause the appearance of the detected character to flash or flicker in synchronism with such movement.

The output signal COMPARE from the comparator 60 is also transmitted to the logical NAND circuit 70 (Fig. 2) which has been enabled by the output signal $\overline{PLO}$ received over a line 94 from the inverter circuit 62 (Fig. 2). The output signal $\overline{COMPARE}$ (Fig. 4) of the NAND circuit 70 is transmitted over a line 96 to the clear input of a D-type flip-flop 98 (Fig. 3) located in the locking logic circuit 72 (Fig. 2). The output signal SPLEN (Fig. 4) of the flip-flop 98 is normally high due to the +5 volt source on the input 100 (Fig. 3). When the signal $\overline{COMPARE}$ goes low upon the latching of a character by light pen 32 (Fig. 1), the output signal SPLEN which is transmitted over a line 102 to a further D-type flip-flop 104 goes high to low, thereby switching the outputs of the flip-flop 104. The clearing of the flip-flop 104 results in the output signal PLEN (Fig. 4) being switched from high to low upon the generation of the next clock signal $\overline{VBL}$ while the second output signal LOCK of the flip-flop 104 is switched from low to high.

The switching of the output signal PLEN of the flip-flop 104 from high to low (Fig. 4) disables the logical NAND circuit 66 (Fig. 2) from resetting the flip-flop 76 in a manner which has been described previously, the flip-flop 76 being in a set condition due to the previous generation of the preset signal $\overline{VBL}$. It will be seen that this condition effectively locks the output of the latch 58 on the character position originally sensed by the light pen 32. This is advantageous, as will now be explained. If the light pen 32 is inadvertently positioned adjacent the original character position so as to receive light from an adjacent character position in addition to the original character position, the output signal COMPARE of the comparator 60 will still provide an inverted video operation on the CRT 20 wherein the original character sensed by the light pen will remain inverted without interference from the adjacent character. The logical NAND circuit 66 will remain disabled as long as the signal PLO is generated by the light pen 32 based on receiving light from the original character position.

The switching of the output signal LOCK (Fig. 3) from low to high (Fig. 4) upon the inputting of the rising edge of the signal $\overline{VBL}$ to the flip-flop 104 will condition, over a line 106, a trailing edge detector 108 which comprises a pair of 1K resistors 110 and a 1,000pf capacitor 112. Upon the removal of the light pen 32 to a position where all light from the latched character position is lost, the signal PLO goes high and $\overline{PLO}$ goes low when the electron beam passes over the latched character position thereby disabling the NAND circuit 70 (Figs. 2 and 3) whose output signal $\overline{COMPARE}$ becomes high allowing the flip-flop 98 (Fig. 3) to remain in a set condition due to the generation of the last VBL signal. With the flip-flop 98 in a set condition, the output signal SPLEN will remain high allowing the clock signal $\overline{VBL}$ to set the flip-flop 104 which switches the output signal PLEN from low to high (Fig. 4) and the output signal LOCK from high to low.

As shown in Fig. 3, when the LOCK signal goes from high (+5 volts) to low (0 volts), the capacitor 112 will be initially discharged and then charged to 5 volts by the +5 volts received over line 114 from a 5 volt power supply (not shown). As shown in Fig. 4, the output of the edge detector 108 comprises the RESET signal which when going low upon the LOCK signal going low will be transmitted over line 116 to reset the latch 58 (Fig. 2) thereby conditioning the latch 58 and the circuit for a new character position detection operation.

It is thus seen that the circuit disclosed in the present invention provides a positive identification of the character sensed by the light pen 32 together with a locking feature which prevents any interference with the sensing signal as long as the light pen receives light from the original character sensed.

It will be appreciated that the system described is implemented in a low-cost manner.

**Claims**

1. A light pen detection system including a cathode ray tube (20) having a display screen, video drive means (30) adapted to form indicia images on and contrasting visually with the background of said display screen, a light pen (32) provided with transducing means adapted to provide a detection signal in response to detecting one of said indicia images, and verifying means coupled to said video drive means and adapted to cause said video drive means (30) to provide a visual indication on said display screen of the one of said indicia images detected by said transducing means, said verifying means including storage means (58) arranged to store location data representing the location of the detected indicia image, characterized in that said verifying means is adapted to reverse the visual contrast of the detected indicia image and an adjust background region of said display screen in dependence on the stored location data, and in that said-verifying means includes automatically locking means (72) responsive to the provision of said detection signal (PLO) and adapted to provide a locking control signal effective to disable said storage means (58) from storing the address of a further indicia image as long as said transducing means continues to provide said detection signal (PLO).

2. A light pen detection system according to claim 1, including display control means (36, 42, 46, 50, 52) adapted to provide address signals representing said location data in the form of addresses of indicia images formed on said display screen, wherein said storage means (58) is adapted in response to said detection signal (PLO) to store the address representing the location of the detected indicia image.

3. A light pen detection system according to claim 2, wherein said verifying means includes comparison means (60) having inputs coupled to said display control means and to said storage means (58), said comparison means (60) being adapted to provide a comparison signal (COMPARE) in response to the provision by said display control means of address signals corresponding to the address stored in said storage means (58), said comparison signal (COMPARE) being effective in operation to cause said video drive means (30) to reverse the visual contrast of the indicia image having its address stored in said storage means (58).

4. A light pen detection system according to claim 3, wherein said display control means includes indicia image generator means (46, 50, 52) responsive to the address signals of indicia images to be formed on said display screen to provide a video signal representing the indicia image to be formed, said video signal and said comparison signal being applied in operation to gating means (54) coupled to said video drive means (30) and included in said verifying means.

5. A light pen detection system according to claim 4, wherein said gating means includes an exclusive OR gate (54).

6. A light pen detection system according to claim 5, wherein said verifying means includes first logic circuit means (66, 76, 80) responsive to said detection signal (PLO) to enable said storage means (58), said locking means (72) having an output coupled to said first logic circuit means (66, 76, 80) and an input coupled to an output of second logic circuit means (70) which has inputs responsive to said detection signal (PLO) and said comparison signal (COMPARE), whereby said locking means (72) provides said locking control signal in response to said detection and comparison signals.

7. A light pen detection system according to claim 6, wherein said display control means includes clock pulse generating means (38) adapted to generate clock pulses synchronized with the display of indicia images on said display screen, a horizontal address counter (36) adapted to count said clock pulses to provide an indication of the horizontal position of said indicia images on said display screen and a vertical address counter (42) coupled to said horizontal address counter and adapted to provide an indication of the vertical position of said indicia images on said display screen outputs of said horizontal (36) and vertical (42) address counters being adapted to provide said address signals.

8. A method of detecting images on a television screen adapted to have a plurality of indicia images displayed thereon, including the steps of moving a light pen (32) including transducing means adjacent to a selected one of said images, generating a detection signal (PLO) in response to the detection of said selected indicia image by said transducing means, providing a visual indication on said television screen of the selected image, and storing in data storage means (58) data representing the location on the screen of the detected indicia image, characterized by the steps of reversing the visual contrast of the detected indicia image and an adjacent background region of said television screen, in response to the stored location data, and automatically providing a locking control signal effective to disable said data storage means (58) from storing fresh data, as long as said detection signal (PLO) continues to be produced.

9. A method according to claim 8, including the steps of comparing the contents of said storage means with addresses of indicia images provided on said screen to provide a comparison signal and inverting a video signal providing said indicia images in response to said comparison signal indicating valid comparison.

**Revendications**

1. Système de détection à pinceau lumineux, comprenant un tube (20) à rayons cathodiques comportant un écran d'affichage, un étage, d'attaque vidéo (30) destiné à former des images de graduation sur ledit écran d'affichage, ces images formant un contraste visuel avec le fond de l'écran, un pinceau lumineux (32) associé à un dispositif convertisseur destiné à produire un signal de détection en réponse à la détection de l'une desdites images de graduation, et un circuit de contrôle couplé audit étage d'attaque vidéo et destiné à agir sur ledit étage d'attaque vidéo (30) pour produire une indication visuelle sur ledit écran d'affichage de l'une desdites images de graduation détectées par ledit dispositif convertisseur, ledit circuit de contrôle comprenant une mémoire (58) conçue pour enregistrer des données de position représentant la position de l'image de graduation détectée, caractérisé en ce que ledit dispositif de contrôle est destiné à inverser le contraste visuel de l'image de graduation détectée et d'une région voisine du fond dudit écran d'affichage en fonction des données mémorisées de position, et en ce que ledit dispositif de contrôle comprend un dispositif de verrouillage automatique (72) sensible à la présence dudit signal de détection (PLO) et destiné à produire un signal de commande de blocage ayant pour effet d'interdire à ladite mémoire (58) d'enregistrer l'adresse d'une autre image de graduation aussi longtemps que ledit dispositif convertisseur continue de délivrer ledit signal de détection (PLO).

2. Système de détection à pinceau lumineux selon la revendication 1, comprenant un dispositif de commande d'affichage (36, 42, 46, 50, 52) destiné à délivrer des signaux d'adresse représentant lesdites données de position souls la forme d'adresses d'images de graduation formées sur ledit écran d'affichage, dans lequel ladite mémoire (58) est destinée, en réponse audit signal de détection (PLO), à enregistrer l'adresse représentant la position de l'image de graduation détectée.

3. Système de détection à pinceau lumineux selon la revendication 2, caractérisé en ce que ledit circuit de contrôle comprend un comparateur (60) dont les entrées sont connectées audit dispositif de commande d'affichage et à ladite mémoire (58), ledit comparateur (60) étant destiné à délivrer un signal de comparaison (COMPARE) en réponse à la délivrance par ledit dispositif de commande d'affichage de signaux d'adresse correspondant à l'adresse mémorisée dans ladité mémoire (58), ledit signal de comparaison (COMPARE) faisant inverser en service par ledit étage d'attaque vidéo (30) le contraste visuel de l'image de graduation dont l'adresse est enregistrée dans ladite mémoire (58).

4. Système de détection à pinceau lumineux selon le revendication 3, caractérisé en ce que ledit dispositif de commande d'affichage comprend un générateur d'image de graduation (46, 50, 52) qui répond aux signaux d'adresse des images de graduation devant être formées sur ledit écran d'affichage de manière à délivrer un signal vidéo représentant l'image de graduation devant être formée, ledit signal vidéo et ledit signal de comparaison étant appliqués en service à un dispositif de déclenchement périodique (54) couplé audit étage d'attaque vidéo (30) et que comprend ledit circuit de contrôle.

5. Système de détection à pinceau lumineux selon la revendication 4, caractérisé en ce que ledit dispositif de déclenchement périodique comprend une porte OU-EXCLUSIF (54).

6. Système de détection à pinceau lumineux selon la revendication 5, caractérisé en ce que ledit circuit de contrôle comprend un premier circuit logique (66, 76, 80) qui répond audit signal de détection (PLO) en débloquant ladite mémoire (58), une sortie dudit circuit de verrouillage (80, 72) ayant une sortie connectée audit premier circuit logique (66, 76, 80) et une entrée connectée à une sorite d'un second circuit logique (70) dont les entrées répondent audit signal de détection (PLO) et audit signal de compariason (COMPARE) de manière que ledit dispositif de verrouillage (72) délivre ledit signal de commande de blocage en réponse auxdits signaux de détection et de comparaison.

7. Système de détection à pinceau lumineux selon la revendication 6, caractérisé en ce que ledit dispositif de commande d'affichage comprend un générateur d'impulsions d'horloge (38) destiné à produire des impulsions d'horloge qui sont synchronisées avec l'affichage des images de graduation sur ledit écran, un compteur d'adresses horizontales (36) étant destiné à compter lesdites impulsions d'horloge de manière à délivrer une indication de la position horizontale des images de graduation sur ledit écran d'affichage et un compteur d'adresses verticales (42) étant connecté audit compteur d'adresses horizontales et destiné à délivrer une indication de la position verticale desdites images de graduation sur ledit écran d'affichage, les sorties desdits compteurs d'adresses horizontales (36) et d'adresses verticales (42) étant destinées à délivrer lesdits signaux d'adresse.

8. Procédé de détection d'images sur un écran de télévision destiné à afficher plusieurs images de graduation, comprenant les étapes qui consistent à déplacer un pinceau lumineux (32) associé à un dispositif convertisseur adjacent à l'une, sélectionnée, desdites images, à générer un signal de détection (PLO) en réponse à la détection de ladite image de graduation sélectionnée par le dispositif convertisseur, à produire sur ledit écran de télévision une indication visuelle de l'image sélectionnée, et à enregistrer dans une mémoire (58) de données des données représentant la position sur l'écran de l'image détectée de graduation, caractérisé par les étapes qui consistent à inverser le contraste visuel de l'image de graduation détectée et d'une région adjacente du fond dudit écran de télévision, en réponse aux données de position enregistrées, et à produire auromatiquement un signal de commande de blocage ayant pour effet d'interdire à ladite mémoire (58) de données d'enregistrer des données nouvelles tant que ledit signal de détection (PLO) continue d'être produit.

9. Procédé selon la revendication 8, caractérisé en ce qu'il consiste par ailleurs à comparer le contenu de la mémoire avec les adresses des images de graduation produites sur ledit écran de manière à obtenir un signal de comparaison et à inverser un signal vidéo donnant lesdites images de graduation en réponse à l'indication par le signal de comparaison que la comparaison est valable.

**Patentansprüche**

1. Lichtgriffelfeststellsystem mit einer einen Anzeigeschirm aufweisenden Kathodenstrahlröhre (20), Videotreibermitteln (30), welche auf dem Anzeigeschirm Zeichenbilder in sichtbarem Kontrast zum Hintergrund des Anzeigeschirms bilden können, einem Lichtgriffel (32), welcher mit zur Feststellung der genannten Zeichenbilder geeigneten Wandlermitteln ausgestattet ist, und mit den genannten Videotreibermitteln gekoppelten Bestätigungsmitteln, welche geeignet sind zu bewirken, dass die Videotreibermitteln (30) eine sichtbare Anzeige des einen von den Wandlermitteln festgestellten der Zeichenbilder auf dem genannten Anzeigeschirm erzeugen, wobei die Bestätigungsmittel Speichermittel (58) besitzen, welche angeordnet sind, Positionsdaten zu speichern, die die Stelle des festgestellten Zeichenbildes darstellen, dadurch gekennzeichnet, dass die Bestätigungsmittel geeignet sind, den visuellen Kontrast des festgestellten Zeichenbildes und eines benachbarten Hintergrundbereiches des Anzeigeschirms abhängig von den gespeicherten Positionsdaten umzukehren, und dass die Bestätigungsmittel automatisch blockeirende Mittel (72) umfassen, welche auf die Erzeugung des genannten Festellsignals (PLO) ansprechen und geeignet sind, eine Blockiersteuersignal zu erzeugen, welches bewirkt, dass die genannten Steuermittel (58) am Speichern der Adresse eines weiteren Zeichenbildes gehindert werden, solange die genannten Wandlermittel weiterhin das genannte Feststellsignal (PLO) abgeben.

2. Lichtgriffelfeststellsystem nach Anspruch 1, gekennzeichnet durch Anzeigesteuermittel (36, 42, 46, 50, 52), die geeignet sind zur Erzeugung von die genannten Positionsdaten darstellenden Adressensignalen in Form von Adressen von auf dem genannten Anzeigeschirm gebildeten Zeichenbildern, wobei die genannten Speichermittel (58) geeignet sind, unter Ansprechen auf das genannte Feststellsignal (PLO) die die Position des festgestellten Zeichenbildes darstellende Adresse zu speichern.

3. Lichtgriffelfeststellsystem nach Anspruch 2, dadurch gekennzeichnet, dass die Bestätigungsmittel Vergleichsmittel (60) besitzen, deren Eingänge mit den genannten Anzeigesteuermitteln und den genannten Speichermitteln (58) gekoppelt sind, wobei die Vergleichsmittel (60) ein Vergleichssignal (COMPARE) abhängig von der Erzeugung von Adressensignalen durch die genannten Anzeigesteuermittel entsprechend der in den genannten Speichermitteln (58) gespeicherten Adresse erzeugen und wobei das Vergleichssignal (COMPARE) im Betrieb bewirkt, dass die genannten Videotreibermittel (30) den visuellen Kontrast des Zeichenbildes umzukehren, dessen Adresse in den genannten Speichermitteln (58) gespeichert ist.

4. Lichtgriffelfeststellsystem nach Anspruch 3, dadurch gekennzeichnet, dass die genannten Anzeigesteuermittel Zeichenbild-Erzeugungsmittel (46, 50, 52) enthalten, welche auf die Adressensignale der auf dem genannten Anzeigeschirm zu bildenden Zeichenbilder ansprechen und ein das zu bildende Zeichenbild darstellendes Videosignal erzeugen, wobei das genannte Videosignal und das genannte Vergleichssignal im Betrieb an Gattermittel (54) angelegt werden, die mit den genannten Videotreibermitteln (30) gekoppelt sind und in den genannten Bestätigungsmitteln beinhaltet sind.

5. Lichtgriffelfeststellsystem nach Anspruch 4, dadurch gekennzeichnet, dass die genannten Gattermittel ein "exklusives ODER"-Glied (54) umfassen.

6. Lichtgriffelfeststellsystem nach Anspruch 5, dadurch gekennzeichnet, dass die genannten Bestätigungsmittel erste Verknüpfungsschaltungen (66, 76, 80) beinhalten, welche auf das genannte Feststellsignal (PLO) zum Wirksammachen der genannten Speichermittel (58), der genannten Blockiermittel (72) ansprechen, die einen Ausgang besitzen, welcher mit den genannten ersten Verknüpfungsschaltungen (66, 76, 80) gekoppelt ist und deren Eingang mit einem Ausgang der zweiten Verknüpfungsschaltungen (70) gekoppelt ist, welche Eingänge besitzen, die auf das genannte Feststellsignal (PLO) und das genannte Vergleichssignal (COMPARE) ansprechen, so dass die Blockiermittel (72) das genannte Blockiersteuersignal abhängig von den genannten Feststell- und Vergleichssignalen abgeben.

7. Lichtgriffelfeststellsystem nach Anspruch 6, dadurch gekennzeichnet, dass die genannten Anzeigeschirmsteuermittel Taktimpuls-Generatormittel (38) besitzen, welche mit der Darstellung von Zeichenbildern auf dem genannten Anzeigeschirm synchronisierte Taktimpulse erzeugen, ferner einen Horizontal-Adressenzähler (36), der genannte Taktimpulse zur Anzeige der Horizontalposition der genannten Zeichenbilder auf dem genannten Anzeigeschirm zählen sowie einen Vertikal-Adressenzähler (42), mit den genannten Horizontal-Adressenzähler gekoppelt ist und eine Anzeige der Vertikalposition der genannten Zeichenbilder auf dem genannten Anzeigeschirm erzeugen kann, wobei die Ausgänge des genannten Horizontal- (36) und Vertikal- (42) Adressenzählers die genannten Adressensignale abgeben.

8. Verfahren zum Feststellen von Bildern auf einem Fernsehschirm, auf dem eine Mehrzahl von Zeichenbildern dargestellt werden kann, beinhaltend die Schritte Bewegen eines Wandlermittel besitzenden Lichtgriffels (32) in die Nähe eines ausgewählten der genannten Bilder, Erzeugen eines Feststellsignals (PLO) abhängig von der Feststellung des genannten ausgewählten Zeichenbildes durch die genannten Wandlermittel und Erzeugen einer visuellen Anzeige des ausgewählten Bildes auf dem genannten Fernsehschirm und Speichern von die Position des festgestellten Zeichenbildes auf dem Schirm darstellenden Daten in Datenspeichermitteln (58), gekennzeichnet durch die Schritte Umkehren des visuellen Kontrasts des festgestellten Zeichenbildes und eines benachbarten Hintergrundbereiches des genannten Fernesehschirmes abhängig von den gespeicherten Positionsdaten und automatisches Erzeugen eines Blockiersteuersignals, das bewirkt, dass die genannten Datenspeichermittel (58) am speichern neuer Daten gehindert werden, solange das genannte Feststellsignal (PLO) weiterhin erzeugt wird.

9. Verfahren nach Anspruch 8, gekennzeichnet durch die Schritte Vergleichen des Inhalts der genannten Speichermittel mit Adressen von auf dem genannten Anzeigeschirm vorgesehenen Zeichenbildern um ein Vergleichssignal zu erzeugen, und Invertieren eines genannte Zeichenbilder darstellenden Videosignals abhängig ob das Vergleichssignal einen gültigen Vergleich anzeigt.

# FIG. 1

# FIG. 3

**FIG. 2**

# FIG. 4

VBL

PLO

COMPARE

SPLEN

PLEN

LATCH ENABLE

DXFER

LOCK

RESET

INVERSE VIDEO

0007912